Europäisches Patentamt

(19) European Patent Office

Office européen des brevets

(11) Publication number : **0 216 806**
**B1**

(12) **EUROPEAN PATENT SPECIFICATION**

(45) Date of publication of patent specification :
30.08.89

(21) Application number : 86901276.5

(22) Date of filing : 10.02.86

(86) International application number :
PCT/US 86/00276

(87) International publication number :
WO/8605014 (28.08.86 Gazette 86/19)

(51) Int. Cl.⁴ : **G 06 F   3/16**, G 06 F   3/00,
G 11 B 15/02,
H 04 M   1/274

(54) Circuit Device used as an Interface between a Computer and an Accessory Device.

(30) Priority : 22.02.85 US 704233

(43) Date of publication of application :
08.04.87 Bulletin 87/15

(45) Publication of the grant of the patent :
30.08.89 Bulletin 89/35

(84) Designated contracting states :
DE GB NL

(56) References cited :
WO—A—81 /028 24
GB—A— 2 119 207
US—A— 3 668 648
US—A— 4 109 285
I.B.M. Technical Disclosure Bulletin, volume 25, no.
4,September 1982, New York, (US) L.C. Egge-
brecht:"Sound generation circuit",pages 2233-2234

(73) Proprietor : NCR Corporation
World Headquarters
Dayton, Ohio 45479 (US)

(72) Inventor : SMALL, James, Robert
204 East Main
Trotwood, OH 45426 (US)

(74) Representative : Robinson, Robert George
International Patent Department NCR Limited 206
Marylebone Road
London NW1 6LY (GB)

## Description

Technical Field

This invention relates to a circuit device used as an interface between a computer and an accessory device. The invention has particular application to a circuit device for use with a personal computer of the type having an audio circuit for generating tones, and with an accessory device, such as a cassette recorder.

Background Art

In the personal computer art, the software of a computer creates a display upon the CRT screen, and it may be desired to commence operation of an accessory device at a particular time in the course of such display. For example, in learning type environments, it may be desired to augment the visual display with an audio presentation. However, problems may be experienced in synchronizing the audio presentation with the display.

GB-A-2 119 207 discloses an input/output circuitry which is used as an interface between a computer and ancilliary components. The circuitry comprises first and second switching circuits respectively actuable in response to signals from the computer, either to operate a tape recorder or to drive a loudspeaker providing the computer with a sound facility.

Disclosure of the Invention

It is an object of the invention to provide a simple and inexpensive circuit device used as an interface between a computer of the type having an audio circuit for generating tones and an accessory device, which circuit device may be used to bring about operation of said accessory device under the control of the computer.

It is a further object of the invention to provide a simple and inexpensive circuit device for synchronizing an accessory device to such computer.

According to the invention, there is provided a circuit device used as an interface between a computer and an accessory device wherein the computer is of the type having an audio circuit for generating tones, including conductor means and switch means operable in response to signals from the computer to activate said accessory device, characterized in that said switch means is an alternating current relay whose coil is connected to said audio circuit, and whose contacts are connected to said accessory device and are arranged to be activated in response to energizing said coil by an audio frequency electrical signal generated by said audio circuit.

It should be understood that by using a circuit device in accordance with the invention a computer may be programmed to activate an accessory device through the generation of audio frequency electrical signals, at selected times and for selected time periods so as to provide a supplemental source of information to the computer user.

Brief Description of the Drawings

An embodiment of the invention will now be described by way of example with reference to the accompanying drawings, in which :
Fig. 1 is a perspective view partially in phantom outline and partially in cut-away showing the preferred embodiment of a circuit device in accordance with the present invention interfacing with a computer and a cassette recorder ;
Fig. 2 is a schematic circuit diagram of the circuit device of Fig. 1 and associated parts of the computer and cassette recorder ; and
Fig. 3 is a schematic diagram illustrating a second application of the circuit device in accordance with the invention.

Best Mode for Carrying Out the Invention

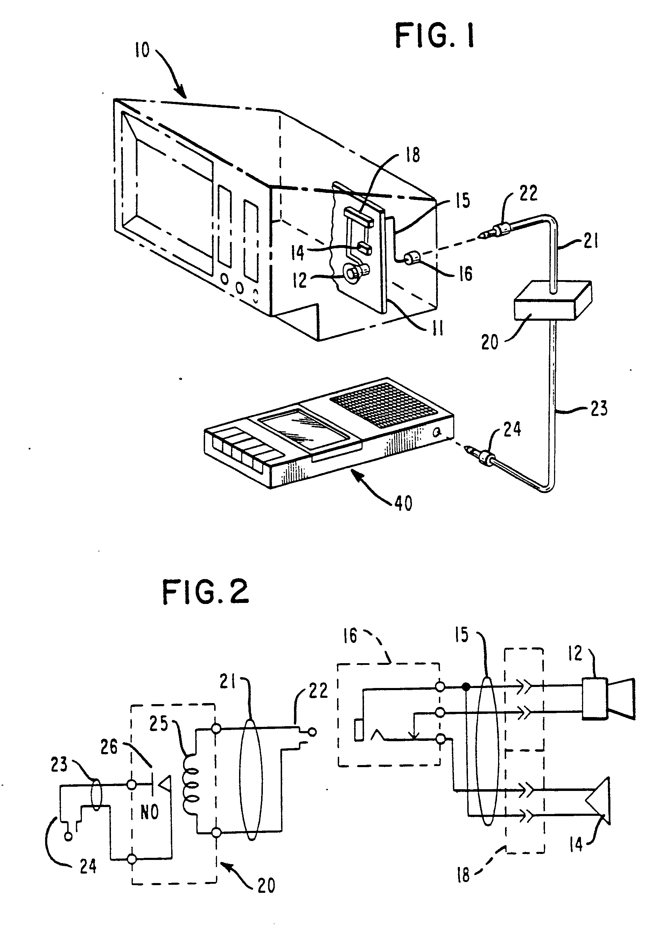

Referring now to Fig. 1, a personal computer (such as an NCR PC-4) labeled 10 is shown containing a component board 11 on which is mounted a speaker 12 and a driver circuit 14 for translating digital signals into an audio frequency electrical signal of sufficient power to drive speaker 12. A connector 18 receives the output wires from the driver and is used to connect those wires with the input to the speaker 12. A female receptacle (jack) 16 is affixed to the back wall of the cabinet of the personal computer. A cable 15, extending from the receptacle 16, is directed to the connector 18. A jack plug 22 designed to be received by the receptacle 16 is electrically connected by a cable assembly 21 to a relay unit 20. In the preferred embodiment of the invention, the relay is a CLARE model 925A05 type alternating current relay having a set of normally open (NO) contacts 26 (See Fig. 2). The contact outputs from the relay 20 are electrically coupled to a jack plug 24 by means of a cable 23. The plug 24 is adapted to be received by a computer accessory such as a cassette recorder 40.

Referring now to Fig. 2, the jack plug 22 is electrically connected across the relay coil 25 of relay 20 by the cable 21. The plug receptacle 16 is wired to connector 18 by the cable 15 so as to electrically disengage the speaker 12 from the driver circuit 14 and to connect the relay coil 25 to the output of the driver circuit 14 when plug 22 is inserted. The relay coil 25 has a 300 ohm resistance and a 2.5V pull-in and when energized by an audio frequency signal from the driver circuit 14 will close the normally open contacts 26, thereby creating a closed circuit sensible at the plug 24 through the conductors of cable 23. In most instances in a cassette recorder, the closing or shorting of the input terminals causes the recorder to be activated. In those instances where a normally closed circuit causes the accessory device to remain in a deactive position and an open circuit is needed to activate the accessory, a relay having the same characteristics as the aforedescribed relay could be used with the exception that the normally open contacts would now be normally closed. If the accessory device is power actuated, a power source could also be inserted in line with cable 23 such that power is applied to the accessory device when contacts 26 close.

The relay 20 requires a certain energy content to be applied to coil 25 in order to have the relay close the contacts 26. Once close, a lower level of applied energy will maintain the contacts closed. The software used in the personal computer is programmed in a well-known manner to call for an audio tone which has a duration corresponding to the desired length of time that the cassette recorder 40 is to be run. Such call causes the driver circuit 14 to generate an audio frequency electrical signal which has the correct energy content to activate the relay 20 so as to close the contacts 26 and thereby activate the cassette recorder 40. A tone between 700 Hz and 15 000 Hz has been found to be acceptable with the 925A05 type relay. The pulse signal corresponding to the tone and having a pulse width of 20 milliseconds and an amplitude of at least 2.5V will activate the relay. A pulse rest of 50 milliseconds will permit the relay to deactivate. The computer tone thereby enables a synchronized activation of the cassette recorder. Operating in this manner, it is possible to display data on the personal computer's CRT and to simultaneously provide a supplemental voice narration from the cassette recorder. This is particularly advantageous in learning type environments where the CRT may be teaching a visual lesson which is supplemented by the audio.

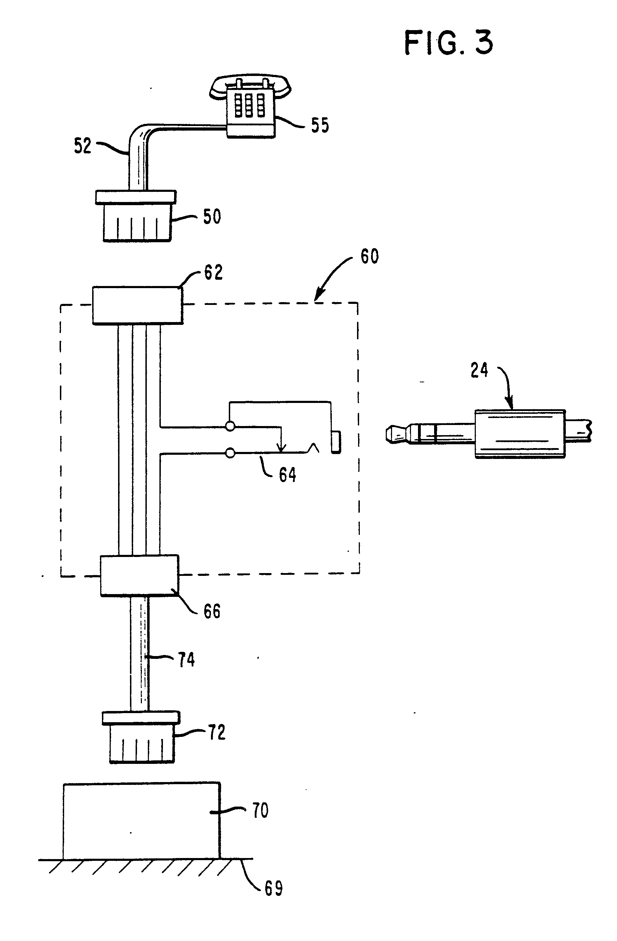

Referring now to Fig. 3, wherein a second application of the invention is shown, the circuit may be used to automatically dial a telephone in response to the computer closing and opening the relay contacts 26 in response to audio frequency signals received by the relay 20. Affixed to a wall 69, is a telephone receptacle jack 70 which receives a standard four conductor telephone type connector 72. The connector 72 is connectable by a cable 74 to a junction box 60. The junction box 60 contains a ferrule 66 which locks the cable 74 and its four conductors to the box. A female jack receptacle 64 is electrically connected in one line of the four conductors of cable 74 in such a manner that normally the fourth conductor remains electrically unbroken between the input connector 72 and an output connector 62. A telephone 55 is connected by means of cable 52 to a standard telephone connector 50 of the four conductor type. Connector 50 mates with connector 62. The assembly shown in Figs. 1 and 2 containing the relay 20, jack plugs 22 and 24 is connectable by plug 24 to the assembly of Fig. 3, i. e. plug 24 is insertable into the jack receptacle 64 and the plug 22 is insertable into the backpanel of the personal computer 10 via receptacle 16. In operation, signals corresponding to the desired telephone number to be dialed can be transmitted from the computer through the relay contacts 26 to the telephone dialing line.

## Claims

1. A circuit device used as an interface between a computer (10) and an accessory device (40 ; 55) wherein the computer is of the type having an audio circuit (12, 14, 18) for generating tones, including conductor means (21, 22, 23, 24) and switch means (20) operable in response to signals from the computer to activate said accessory device (40 ; 55), characterized in that said switch means is an alternating current relay (20) whose coil (25) is connected to said audio circuit (12, 14, 18), and whose contacts (26) are connected to said accessory device (40 ; 55) and are arranged to be activated in response to energization of said coil by an audio frequency electrical signal generated by said audio circuit (12, 14, 18).

2. A circuit device according to claim 1, characterized by first conductor means (21, 22) connecting said coil (25) to said audio circuit (12, 14, 18), and second conductor means (23, 24) connecting said contacts (26) to said accessory device (40 ; 55).

3. The combination of a circuit device according to claim 2, and said computer (10), characterized in that said first conductor means (21, 22) includes a jack plug (22) adapted to be inserted into a receptacle (16) associated with said audio circuit (12, 14, 18) of said computer (10), said audio circuit including a speaker (12) and a driver circuit (14) therefor, insertion of said jack plug (22) into said receptacle serving to disconnect said driver circuit from said speaker and to connect said driver circuit to said switch means (20).

4. The combination of a circuit device according to claim 2, said computer (10) and a cassette recorder (40), characterized in that said first conductor means (21, 22) includes a first jack plug (22) adapted to be inserted into a first receptacle (16) associated with said audio circuit (12, 14, 18) of said computer, said audio circuit including a speaker (12) and a driver circuit (14) therefor, and said second conductor means (23, 24) includes a second jack plug (24) adapted to be inserted into a second receptacle (64) forming part of said cassette recorder (40), insertion of said first jack plug (22) into said first receptacle serving to disconnect said driver circuit (14), from said speaker and to connect said driver circuit (14) to said switch means (20), and said second receptacle (64) being so constructed that, with said second jack plug (24) inserted therein, activation of said switch means (20) serves to bring about activation of said cassette recorder (40).

5. The combination of a circuit device according to claim 2, said computer (10) and a telephone (55) to be dialed by said computer, characterized in that said first conductor means (21, 22) includes a first jack plug (22) adapted to be inserted into a first receptacle (16) associated with said audio circuit (12, 14, 18) of said computer, said audio circuit including a speaker (12) and a driver circuit (14) therefor, and said second conductor means (23, 24) includes a second jack plug (24) adapted to be inserted into a second receptacle (64) forming part of connection means (60) convertable to said telephone, insertion of said first jack plug (22) into said first receptacle (16) serving to disconnect said driver circuit (14) from said speaker (12) and to connect said driver circuit (14) to said switch means (20), and said connection means (60) being so constructed that, with said second jack plug (24) inserted in said second receptacle (64), appropriate activation and deactivation of said switch means (20) serves to bring about dialing of said telephone (55).

## Patentansprüche

1. Schaltungsanordnung verwendbar als Schnittstelle zwischen einem Rechner (10) und einer Zusatzvorrichtung (40 ; 55), wobei der Rechner von derjenigen Art ist, die eine NF-Schaltung (12, 14, 18) zum Erzeugen von Tönen aufweist, mit Leitervorrichtungen (21, 22, 23, 24) und einer Schaltvorrichtung (20), die unter Ansprechen auf Signale von dem Rechner betätigbar ist, um die Zusatzvorrichtung (40 ; 55) zu aktivieren, dadurch gekennzeichnet, daß die Schaltvorrichtung ein Wechselstromrelais (20) ist, dessen Wicklung (25) mit der NF-Schaltung (12, 14, 18) verbunden ist und dessen Kontakte (26) mit der Zusatzvorrichtung (40 ; 55) verbunden und angeordnet sind, unter Ansprechen auf die Erregung der Wicklung mit einem von der NF-Schaltung (12, 14, 18) erzeugten elektrischen NF-Frequenzsignal aktiviert zu werden.

2. Schaltungsanordnung nach Anspruch 1, gekennzeichnet durch erste Leitervorrichtungen (21, 22), die die Wicklung (25) mit der NF-Schaltung (12, 14, 18) verbinden, und zweite Leitervorrichtungen (23, 24), die die Kontakte (26) mit der Zusatzvorrichtung (40 ; 55) verbinden.

3. Kombination einer Schaltungsanordnung nach Anspruch 2 und dem Rechner (10), dadurch gekennzeichnet, daß die ersten Leitervorrichtungen (21, 22) einen Raststecker (22) aufweisen, der in eine der NF-Schaltung (12, 14, 18) des Rechners (10) zugeordnete Steckbuchse (16) eingesteckt werden kann, wobei die NF-Schaltung einen Lautsprecher (12) und eine Treiberschaltung (14) dafür aufweist und wobei das Einstecken des Raststeckers (22) in die Steckbuchse dazu dient, die Treiberschaltung von dem Lautsprecher abzutrennen und die Treiberschaltung mit der Schaltvorrichtung (20) zu verbinden.

4. Kombination einer Schaltungsanordnung nach Anspruch 2, eines Rechners (10) und eines Kassettenrekorders (40), dadurch gekennzeichnet, daß die ersten Leitervorrichtungen (21, 22) einen ersten Raststecker (22) aufweisen, der in eine erste Steckbuchse (16) eingesteckt werden kann, die der NF-Schaltung (12, 14, 18) des Rechners zugeordnet ist, wobei die NF-Schaltung einen Lautsprecher (12) und eine Treiberschaltung (14) dafür aufweisen, und die zweiten Leitervorrichtungen (23, 24) einen zweiten Raststecker (24) aufweisen, der in eine Steckbuchse (64) eingesteckt werden kann, die Teil des Kassettenrekorders (40) bildet, wobei das Einstecken des ersten Raststeckers (22) in die erste Steckbuchse dazu dient, die Treiberschaltung (14) von dem Lautsprecher abzutrennen und die Treiberschaltung (14) mit der Schaltvorrichtung (20) zu verbinden, und die zweite Steckbuchse (64) derart aufgebaut ist, daß bei eingestecktem zweiten Raststecker (24) eine Aktivierung der Schaltvorrichtung (20) dazu dient, die Aktivierung des Kassettenrekorders (40) zu bewirken.

5. Kombination einer Schaltvorrichtung nach Anspruch 2, eines Rechners (10) und eines Telefons (55), das durch den Rechner wählen kann, dadurch gekennzeichnet, daß die ersten Leitervorrichtungen (21, 22) einen ersten Raststecker (22) aufweisen, der in eine erste Steckbuchse (16) einsteckbar ist, die der NF-Schaltung (12, 14, 18) des Rechners zugeordnet ist, daß die NF-Schaltung einen Lautsprecher (12) und eine Treiberschaltung (14) dafür aufweist und daß die zweiten Leitervorrichtungen (23, 24) einen zweiten Raststecker (24) aufweist, der in eine zweite Steckbuchse (64) einsteckbar ist, die Teil einer Verbindungsvorrichtung (60) bildet, die zu dem Telefon konvertierbar ist, wobei das Einstecken des ersten Raststeckers (22) in die erste Steckbuchse (16) zum Abtrennen der Treiberschaltung (14) von dem Lautsprecher (12) und zum Anschließen der Treiberschaltung (14) an die Schaltvorrichtung (20) dient und wobei die Verbindungsvorrichtung (60) derart aufgebaut ist, daß bei eingestecktem zweiten Raststecker (24) in die zweite Steckbuchse (64) eine geeignete Aktivierung und Deaktivierung der Schaltvorrichtung (20) das Wählen des Telefons (55) bewirkt.

## Revendications

1. Dispositif à circuit utilisé en tant qu'interface entre un calculateur (10) et un dispositif annexe (40 ; 55), dans lequel le calculateur est du type comportant un circuit audio (12, 14, 18) destiné à générer des sons, comprenant des moyens conducteurs (21, 22, 23, 24) et des moyens de commutation (20) pouvant être commandés en réponse à des signaux provenant du calculateur pour mettre en action ledit dispositif annexe (40 ; 55), caractérisé en ce que lesdits moyens de commutation comprennent un relais (20) à courant alternatif dont la bobine (25) est connectée audit circuit audio (12, 14, 18) et dont des contacts (26) sont connectés audit dispositif annexe (40 ; 55) et sont agencés de façon à être mis en action en réponse à une excitation de ladite bobine par un signal électrique audio-fréquence généré par ledit circuit audio (12, 14, 18).

2. Dispositif à circuit selon la revendication 1, caractérisé par des premiers moyens conducteurs (21, 22) connectant ladite bobine (25) audit circuit audio (12, 14, 18), et des seconds moyens conducteurs (23, 24) connectant lesdits contacts (26) audit dispositif annexe (40 ; 55).

3. Combinaison d'un dispositif à circuit selon la revendication 2 et dudit calculateur (10), caractérisée en ce que lesdits premiers moyens conducteurs (21, 22) comprennent une fiche à jack (22) conçue pour être insérée dans une douille (16) associée audit circuit audio (12, 14, 18) dudit calculateur (10), ledit circuit audio comprenant un haut-parleur (12) et un circuit amplificateur (14) pour celui-ci, l'insertion de ladite fiche à jack (22) dans ladite douille servant à déconnecter ledit circuit amplificateur dudit haut-parleur et à connecter ledit circuit amplificateur auxdits moyens de commutation (20).

4. Combinaison d'un dispositif à circuit selon la revendication 2, dudit calculateur (10) et d'un enregistreur (40) à cassettes, caractérisée en ce que lesdits premiers moyens conducteurs (21, 22) comprennent une première fiche à jack (22) conçue pour être insérée dans une première douille (16) associée audit circuit audio (12, 14, 18) dudit calculateur, ledit circuit audio comprenant un haut-parleur (12) et un circuit amplificateur (14) pour celui-ci, et lesdits seconds moyens conducteurs (23, 24) comprennent une seconde fiche à jack (24) conçue pour être insérée dans une seconde douille (64) faisant partie dudit enregistreur (40) à cassettes, l'insertion de ladite première fiche à jack (22) dans ladite première douille servant à déconnecter ledit circuit amplificateur (14) dudit haut-parleur et à connecter ledit circuit amplificateur (14) auxdits moyens (20) de commutation, et ladite seconde douille (64) étant réalisée de manière que, ladite seconde fiche à jack (24) y étant insérée, une mise en action desdits moyens de commutation (20) serve à provoquer une mise en action dudit enregistreur (40) à cassettes.

5. Combinaison d'un dispositif à circuit selon la revendication 2, dudit calculateur (10) et d'un téléphone (55) dont les numéros doivent être composés par ledit calculateur, caractérisée en ce que lesdits premiers moyens conducteurs (21, 22) comprennent une première fiche à jack (22) conçue pour être insérée dans une première douille (16) associée audit circuit audio (12, 14, 18) dudit calculateur, ledit circuit audio comprenant un haut-parleur (12) et un circuit amplificateur (14) pour celui-ci, et lesdits seconds moyens conducteurs (23, 24) comprennent une seconde fiche à jack (24) conçue pour être insérée dans une seconde douille (64) faisant partie de moyens (60) de connexion pouvant être connectés audit téléphone, l'insertion de ladite première fiche à jack (22) dans ladite première douille (16) servant à déconnecter ledit circuit amplificateur (14) dudit haut-parleur (12) et à connecter ledit circuit amplificateur (14) aux moyens (20) de commutation, et lesdits moyens (60) de connexion étant réalisés de manière que, ladite seconde fiche à jack (24) étant insérée dans ladite seconde douille (64), une mise en action et une mise hors d'action appropriées desdits moyens de commutation (20) servent à composer un numéro sur ledit téléphone (55).

# FIG. 1

# FIG. 2

1

FIG. 3